# EUROPÄISCHE PATENTSCHRIFT

(11) **EP 2 977 888 B1**
(45) Veröffentlichungstag und Bekanntmachung des Hinweises auf die Patenterteilung: **07.11.2018**
(21) Anmeldenummer: 14177848.0
(22) Anmeldetag: 21.07.2014
(51) Int. Cl.: G06F 8/41, G06F 8/71

(54) **Verfahren und System zur Speicherung und zur Versionsverwaltung von Computerprogrammen**
Method and system for storage and version management of computer programs
Procédé et système destinés à l'enregistrement et à la gestion des versions de programmes informatiques

(43) Veröffentlichungstag der Anmeldung: 27.01.2016
(73) Patentinhaber: Siemens Aktiengesellschaft, 80333 München (DE)
(72) Erfinder: Hellmann, Peter, 90762 Fürth (DE)

(56) Entgegenhaltungen:
- WO-A1-03/005243
- US-A1- 2008 163 168
- US-A1- 2009 282 042
- UELI WAHLI ET AL: "Software Configuration Management, A Clear Case for IBM Rational, ClearCase and ClearQuest UCM", Internet INTERNET CITATION, Dezember 2004 (2004-12), Seiten 1-79, XP002722772, Gefunden im Internet: URL:www.redbooks.ibm.com/redbooks/pdfs/sg2 46399.pdf [gefunden am 2014-04-02]

## Beschreibung

Die Erfindung betrifft ein Verfahren zur Speicherung und zur Versionsverwaltung von Computerprogrammen gemäß dem Oberbegriff des Patentanspruchs 1, und ein System zur Speicherung und zur Versionsverwaltung von Computerprogrammen gemäß dem Oberbegriff des Patentanspruchs 6.

Bei der Entwicklung von Software in mittleren bis größeren Teams ist es ein Muss, Zwischenstände bzw. Versionen der Software zu "versionieren". Dies bedeutet, dass zwischen verschiedenen Ausgabeständen ("Versionen") der jeweiligen Software unterschieden werden muss. Üblicherweise werden dazu Nummerierungen eingesetzt, wobei jeder nachfolgenden Version eine höhere Versionsnummer zugeteilt bekommt, als einer Vorherigen; selbstverständlich sind auch andere Unterscheidungen möglich, etwa durch Buchstaben, alphanumerische Kombinationen oder dgl. Diese "Versionierung" beinhaltet üblicherweise auch eine Datensicherung der einzelnen Softwarestände und ermöglicht außerdem das parallele Arbeiten mehrerer Entwickler/innen an der Software. Änderungen zweier oder mehrerer Personen an demselben Softwareteil können zusammengeführt werden (merging), und unterschiedliche Versionen können miteinander verglichen werden (compare).

Die heutigen Versionskontrollsysteme versionieren immer komplette Dateien oder ganze Bündel von Dateien, die beispielsweise zusammengefasst ein komplettes Programm beziehungsweise den Quellcode eines solchen bilden. Diese Dateien sind zumeist nicht-binäre Dateien, d. h. Textdateien wie etwa Quellcode-Dateien ("Source-Dateien"). Daher wird oft auch der Begriff "Sourcecode-Versionierung" bzw. "Sourcecode-Verwaltung" verwendet. Auch "XML-Files" und andere Textdateien wie z.B. auch "Configurations-Files" können mit den gebräuchlichen Systemen verwaltet und versioniert werden.

Wie bereits erwähnt, "versionieren" die gebräuchlichen Versionskontrollsysteme einzelne Dateien. Im Allgemeinen sind dies sogenannte Quellcodedateien einer bestimmten Programmiersprache, zusätzlich auch andere Dateien wie etwa XML-Dateien oder sonstige Dateien. Binäre Dateien werden im Allgemeinen nicht "versioniert", da meistens die versionierten Quellcodedateien compiliert werden und das Resultat der Compilierung die Binärdatei darstellt. Die Binärdatei, d. h. das Programm bzw. die Anwendung oder auch nur Teile davon, werden also jeweils über die Quellcodedateien generiert, so dass die generierten Dateien nicht gespeichert und auch nicht versioniert werden, allenfalls dann, wenn ein bestimmter Versionsstand ausgeliefert wird.

Die Druckschrift WO 03/005243 A1 - Carlson et al. "Managing reusable software objects" zeigt die Verwaltung von Programm-Artefakten in einem Speichersystem. Zur Wiederverwendung können einzelne Artefakte in dem System gesucht und ausgelesen werden

Die Druckschrift US 2009/0282042 A1 - Rüssel et al. "Method and system for managing the development of data integration projects to facilitate project development and analysis thereof" zeigt die Speicherung von Projektdaten in einer relationalen Datenbank, wobei Methoden für einen konkurrierenden Zugriff auf die Daten vorgesehen sind.

Die Publikation "UELI WAHLI ET AL: "Software Configuration Management, A Clear Case for IBM Rational, ClearCase and ClearQuest UCM", www.redbooks.ibm.com/redbooks/pdfs/sq246399.pdf, zeigt eine Software zur dateibasierten Versionierung von Daten.

Die Veröffentlichung US 2008/163168A1 - Huang "Javascript pre-processing framework" zeigt die Untersuchung von Javascript-Dateien hinsichtlich solcher Kommandos, für die bereits eine Ausführungsinstanz vorliegt; diese werden sogleich mit der vorliegenden Ausführungsinstanz korreliert.

Die gebräuchlichen Versionsverwaltungssysteme weisen den Nachteil auf, dass immer dann, wenn eine Datei mittels Schreibzugriff im Massenspeicher, beispielsweise Festplatte, zugegriffen wird, auch eine neue Version dieser Datei angenommen wird, auch in den Fällen, in denen keine substantielle Änderung des Programmcodes oder des Inhalts erfolgt ist. Das liegt in vielen Fällen daran, dass die Version einer Datei an Ihrem Zeitstempel, also beispielsweise dem Zeitpunkt der letzten Speicherung auf dem betreffenden Datenträger, unterschieden wird. Damit kommt es zur Zuweisung einer höheren Versionsnummer und damit unter anderem zu einer zwingenden Neu-Compilierung des kompletten Projektes oder Teil-Projektes (Delta-Build, Delta-Compile), oder zu anderen unnötigen Aktionen. Um diese Nachteile zu verringern, wird oft vorgeschrieben, die einzelnen Dateien möglichst "klein" zu halten, indem beispielsweise in jeder Datei nur eine Anzahl Klassen etc. gespeichert ist. Andere Ansätze verlangen, dass vor dem Zuweisen einer neuen Versionsnummer ein inhaltlicher Vergleich zwischen der vorherigen Version beziehungsweise dem vorherigen Dateiinhalt und dem neu zu speichernden Inhalt durchgeführt wird, was vorzugsweise automatisch geschehen soll. Dies hat jedoch zum Nachteil, dass eine solche Vergleichseinrichtung oft nicht zwischen unerheblichen (auswirkungslosen) und anderen (substanziellen) Änderungen unterscheiden kann. Im Zweifel wird dann oft angenommen, dass eine neue Version vorliegt, auch wenn nur eine Formatierung oder ein Kommentar geändert wurden.

Es ist daher eine Aufgabe der vorliegenden Erfindung, ein effizientes und zuverlässiges Verfahren und System zur Speicherung und Verwaltung von Computerprogrammen, insbesondere von Quelltext für Computerprogramme, anzugeben.

Der erfindungsgemäßen Lösung dieser Aufgabe liegt die Erkenntnis zu Grunde, dass mit der Versionierung der gesamten Datei gewöhnlich auch Informationen zur Formatierung (z.B. CR/LF und Tabulatoren/TABS), Leerzeichen etc. mitversioniert werden, obwohl diese Informationen für die Funktionalität des später erzeugten beziehungsweise kompilierten Programmcodes (Object-Code) ohne jegliche Relevanz sind. Sie stören jedoch beim Vergleich von Versionen ("Compare"), beispielsweise auch bei der Zusammenführung von Informationen ("Merge"), die parallel von verschiedenen Mitarbeitern bearbeitet wurden. Erfindungsgemäß können solche Nachteile vermieden werden, wenn nicht die Datei selbst, sondern das, was die jeweilige Datei funktional beinhaltet, versioniert wird. Darüber hinaus legt der Erfindung die Erkenntnis zu Grunde, dass dazu anstelle einer dateiorientierten Verwaltung die Verwaltung kleinster funktionaler Einheiten, beispielsweise einzelner Funktionen, Klassen oder Methoden etc., in "dateiloser" Form, also bevorzugt als Datenbankobjekte, eine "feingranularere" Verwaltung/Versionierung ermöglicht. Es ist also wesentlich, dass die Verwaltung des Programmcodes von einer Dateistruktur entkoppelt wird, so dass möglichst kleine, elementare funktionale Bausteine des Programmcodes einzeln verwaltet und versioniert werden können, wobei zur Entscheidung darüber, ob solch ein elementarer Programmbestandteil gegenüber einer älteren Version verschieden ist, nur auf einer funktionalen Betrachtung, und nicht auf einer formalen Betrachtung beruht. Zwar müssen gegebenenfalls auch Kommentare mit-versioniert werden, haben aber keinen Einfluss auf die Entscheidung, ob ein Code-Fragment neu compiliert und neu versioniert werden muss, oder nicht.

Die Aufgabe wird insbesondere durch ein Verfahren gemäß dem Patentanspruch 1 und durch ein System gemäß dem Patentanspruch 6 gelöst.

Dabei wird ein Verfahren zur Speicherung und zur Versionsverwaltung von Computerprogrammen vorgeschlagen, wobei mit jeder Änderung von Programmcode des Computerprogramms eine neue Versionsbezeichnung zugeordnet wird, und wobei der Programmcode eine Vielzahl Programmelemente umfasst. Dabei werden die Programmelemente einzeln zugreifbar in einer Datenbank oder einer ähnlich dateiunabhängigen Form gespeichert, wobei jedem Programmelement eine separate Versionsbezeichnung zugeordnet wird, und wobei nur bei einer funktionalen Änderung des Programmelementes die Versionsbezeichnung aktualisiert wird. Durch dieses Verfahren wird nur dann eine neue Version erkannt und damit auch nur dann eine neue Versionsbezeichnung zugeordnet, wenn der Programmcode funktionale Änderungen und nicht nur Änderungen hinsichtlich einer Formatierung oder Kommentierung aufweist. Durch die Verwendung von Datenbank-Mechanismen oder ähnlichen Strukturen zur Speicherung und Verwaltung des Programmcodes können die rein funktionalen Programmelemente zwar getrennt verwaltet, dennoch aber mit anderen Programmelementen und auch mit anderen nicht-funktionalen Elementen beliebig verknüpft und miteinander in Bezug gesetzt werden. Auch nichtfunktionale Elemente können bei Änderungen neue, separate Versionsnummern erhalten. Dadurch, dass dies aber getrennt erfasst werden und die Elemente anders klassifiziert sind, kann z.B. ein Delta-Compile viel genauer arbeiten. Sofern der zu speichernde Programmcode Formatierungsangaben umfasst, werden erfindungsgemäß diese Formatierungsangaben beim Speichern der in dem Programmcode enthaltenen Programmelemente verworfen und beim Zugriff auf das oder die Programmelemente mittels eines Editors anhand eines Regelwerks neu erzeugt und dargestellt oder ausgegeben. Dies führt zum einen zu einer jeweils regelkonformen Ausgabe des gespeicherten Programmcodes, und sorgt andererseits dafür, dass nicht-regelkonforme Elemente keinen Einfluss auf die Versionierung haben können. Außerdem ist dadurch eine effiziente Speicherung gesichert. Operationen wie "Merge" und "Compare" können damit auch einfacher und betriebssicherer ausgeführt werden.

Die Aufgabe wird außerdem durch ein System zur Speicherung und zur Versionsverwaltung von Computerprogrammen gelöst, wobei das System derart ausgestaltet ist, dass mit jeder Änderung von Programmcode des Computerprogramms eine neue Versionsbezeichnung zugeordnet wird, und wobei der Programmcode aus einer Vielzahl Programmelemente besteht oder eine Vielzahl Programmelemente umfasst. Dabei ist das System zur einzeln zugreifbaren Speicherung der Programmelemente, vorzugsweise in einer Datenbank, eingerichtet, wobei das System zur Zuordnung einer separaten Versionsbezeichnung zu jedem einzelnen Programmelement eingerichtet ist, wobei das System derart ausgestaltet ist, dass bei einer funktionalen Änderung des Programmelementes die Versionsbezeichnung jeweils aktualisiert wird, und wobei der Programmcode Formatierungsangaben umfasst, wobei das System derart eingerichtet ist, dass die Formatierungsangaben bei Speichern der in dem Programmcode enthaltenen Programmelemente jeweils entfernt und bei Zugriff auf die Programmelemente mittels eines Editors anhand eines Regelwerkes jeweils neu erzeugt werden. Durch ein solches System können die bereits anhand des Verfahrens erläuterten Vorteile realisiert werden.

Vorteilhafte Ausgestaltungen des erfindungsgemäßen Verfahrens beziehungsweise des erfindungsgemäßen Systems sind in den abhängigen Patentansprüchen angegeben. Die dabei beschriebenen Merkmale und Vorteile können sowohl einzeln, als auch in Kombination miteinander realisiert werden. Die Merkmale und deren Vorteile der Ausgestaltungen für das Verfahren gelten dabei auch sinngemäß für das System, und umgekehrt. Die Merkmale der vorteilhaften Varianten können sowohl einzeln, als auch in Kombination miteinander realisiert sein.

In einer vorteilhaften Ausgestaltung werden bei einer wiederholten Compilierung des Programmcodes nur die seit der letzten Compilierung funktional geänderten Programmelemente erneut compiliert. Dadurch wird die Effizienz bei der Code-Generierung verbessert.

In vielen Fällen ist zumindest ein Teil des Programmcodes mit einem Zertifikat versehen, beispielsweise zum Schutz vor unautorisierter Veränderung. Erfindungsgemäß wird in dem Fall, in dem zumindest ein Programmelement des zertifizierten Programmcodes funktional geändert wird, das Zertifikat wider rufen, während bei nicht-funktionalen Änderungen das bisherige Zertifikat gültig bleiben kann.

Vorteilhaft werden als Programmelemente jeweils einzelne funktionale Einheiten, insbesondere einzelne Klassen oder Funktionen, verwaltet. Sofern in einer jeweiligen Anwendung andere Strukturen die kleinstmögliche funktionale Einheit darstellen, können selbstverständlich diese zur Segmentierung eingesetzt werden.

Eine einfache Verwaltung ergibt sich, wenn der Programmcode Programmelemente und nicht-funktionale Elemente, insbesondere Kommentare und Formatierungsangaben, umfasst, wobei in einer vorteilhaften Ausgestaltung die nicht-funktionalen Elemente getrennt von den zugehörigen Programmelementen in der Datenbank gespeichert oder zumindest getrennt klassifiziert werden. Dabei kann über gebräuchliche Mechanismen der Datenbank der jeweilige Bezug zwischen den funktionalen und den nicht-funktionalen Elemente gesichert werden, wozu beispielsweise in der Datenbank jeweils eine Zuordnung zwischen den Programmelementen und den zugehörigen nicht-funktionalen Elementen gespeichert wird.

Sofern der zu speichernde Programmcode Formatierungsangaben umfasst, werden diese Formatierungsangaben beim Speichern der in dem Programmcode enthaltenen Programmelemente verworfen und beim Zugriff auf das oder die Programmelemente mittels eines Editors anhand eines Regelwerks neu erzeugt und dargestellt oder ausgegeben. Dies führt zum einen zu einer jeweils regelkonformen Ausgabe des gespeicherten Programmcodes, und sorgt andererseits dafür, dass nicht-regelkonforme Elemente keinen Einfluss auf die Versionierung haben können. Außerdem ist dadurch eine effiziente Speicherung gesichert. Operationen wie "Merge" und "Compare" können damit auch einfacher und betriebssicherer ausgeführt werden.

Eine weitere Fehlermöglichkeit bei der Programmerstellung, insbesondere bei der gleichzeitigen Bearbeitung eines Projektes durch mehrere Personen, kann ausgeschlossen werden, indem die Datenbank Informationen über Abhängigkeiten zwischen den Programmelementen, insbesondere über wechselweise Verweise oder Zugriffe auf Schnittstellen der Programmelemente, enthält, wobei beim Erzeugen einer neuen Version eines Programmelementes überprüft und ggf. ausgegeben oder signalisiert wird, ob andere Programmelemente, für die mit dem geänderten Programmelement Abhängigkeiten bestehen, angepasst werden müssen. Die konkrete Funktionalität kann vorteilhaft durch den Benutzer oder Administrator konfiguriert werden, z.B. Zurückweisung, Nachziehen aller Caller, Überladene Methode erzeugen anstatt vorhandene zu ändern, automatische "obsolete" Markierungen erzeugen, To-Do Einträge erzeugen, Work-Items erzeugen etc.

Im Folgenden werden Ausführungsbeispiele für das erfindungsgemäße Verfahren diskutiert. Sie dienen gleichzeitig der Erläuterung eines erfindungsgemäßen Systems.

Als ein erstes Ausführungsbeispiel soll im Folgenden das Verwalten einer XML-Datei diskutiert werden. Aus einer solchen XML-Datei wird in einem automatischen Verfahrensschritt, der auch als Kompilieren oder "Parsen" bezeichnet werden kann, die für einen Computer nutzbare Information extrahiert, die oft auch als Document Object Model (DOM) bezeichnet wird. Während die XML-Datei selbst von den meisten Benutzern durch das Einfügen von Formatierungszeichen, beispielsweise Zeilenumbrüche, Tabulatoren, Absatz Marken etc. in eine lesbare Form gebracht wird, sind diese Zeichen für die Erzeugung des Document Object Models (DOM) ohne Belang.

Aus diesem Grund wird erfindungsgemäß lediglich auf Basis der resultierenden DOM versioniert, jedoch keinerlei Formatierungsangaben dabei berücksichtigt, da erfindungsgemäß die DOM "dateilos" gespeichert und verwaltet wird. Formatierungsangaben, wie etwa CR/LF oder TABS, sind in dem gespeicherten XML-Dokument vorzugsweise überhaupt nicht vorhanden und müssen daher nicht z. B. mit Tools wie "StyleCop" überprüft werden. Da Formatierungsangaben in einer vorteilhaften Ausgestaltung bei der Speicherung vollständig entfallen, sind hier Unterschiede bei Vergleichs- sowie Zusammenführungsoperationen ("Merge") nicht relevant, denn mit Entfall dieser Elemente entfallen auch die dadurch resultierenden Unterschiede. Anstelle der Überprüfung von Formatierungsangaben hinsichtlich Richtigkeit, werden diese weder gespeichert, noch versioniert, sondern erst beim Abruf der entsprechenden Datei aus der Datenbank erneut "nicht-destruktiv" so erzeugt/dargestellt, wie gewünscht. Sollte ein XML Dokument extern geändert werden müssen, kann es also jederzeit in eine Datei verpackt und "ausgecheckt" werden. Ein XML-Dokument, ausgecheckt und in eine Datei verpackt, kann mit beliebigen Editoren sowie Entwicklungsumgebungen ("IDEs") editiert werden. Wird ein XML-Dokument, das in eine Datei verpackt ist, wieder in die/das Datenbank/Versionskontrollsystem integriert ("eingecheckt"), wird nur die veränderte DOM eingecheckt und versioniert, die Datei kann danach gelöscht bzw. verworfen werden, da sie nicht Teil der Versionierung ist. Etwaige Kommentare, die nicht automatisch wieder herstellbar sind, können separat in der Datenbank abgelegt werden, wobei eine direkte Zuordnung (Verweis, Link) zu der kommentierten Information hergestellt wird. Änderungen, die nur diese Kommentare betreffen, führen dabei nicht zu einer neuen Versionierung der referenzierten XML-Datei bzw. der referenzierten Informationseinheit, obwohl die Kommentare selbst auch versioniert werden können und in vielen Fällen auch versioniert werden müssen. Während auch in einer erfindungsgemäßen Struktur es weiter möglich ist, komplette Dateien "am Stück" zu verwalten, werden viele Effizienzvorteile nur dann realisiert werden können, wenn entweder sehr kleine Dateien einzeln betrachtet werden, oder eine dateilose Speicherung und Verwaltung möglichst kleiner Informationseinheiten erfolgt.

Beispielsweise könnte eine einfache XML-Datei bzw. ein Ausschnitt einer XML-Datei wie folgt ausgestaltet sein:

```
 <Filme> [CR/LF]
 <Film>Casablanca</Film> [CR/LF]
 <Film>Heidi</Film> [CR/LF]
 <Film>Rebecca</Film> [CR/LF]
 </Filme>
```

Durch Zeilenumbrüche ist dieser Abschnitt gut lesbar; eine Speicherung in einer Datenbank würde diese aber wegen der "Nicht-Funktionalität" der Zeilenumbrüche "[CR/LF]" entfernen, so dass nur funktionale Elemente gespeichert werden:

```
 <Filme><Film>Casablanca</Film><Film>Heidi</Film><Film>Rebecca
 </Film></Filme>
```

Bei einem Auslesen (aus-checken) dieses Abschnittes aus der Datenbank würden die Zeilenumbrüche dann regelbasiert neu erzeugt werden.

Ein weiteres Ausführungsbeispiel betrifft die Verwaltung von Programmcode, beispielsweise in einer objektorientierten Programmiersprache wie C#. Für Entwicklungsprojekte unter Verwendung einer Programmiersprache, wie hier C#, werden im Allgemeinen "Klassen" programmiert, welche wiederum "Methoden", "Felder" sowie "Properties" beinhalten. Bei einem erfindungsgemäßen dateilosen Versionskontrollsystem werden nunmehr keine Dateien mehr versioniert, sondern die programmierten Klassen selbst. Es ist also der Entwicklungszyklus von Klassen, welcher versioniert wird. Wird eine neue Klasse erstellt, bekommt diese einen Namen zugeteilt. Der Name befindet sich in einem sogenannten Namensraum, so dass sich ein voll qualifizierter Name für die Klasse ergibt. Wird nun die Klasse programmiert, fügt man dieser Methoden, Felder und Properties hinzu. Diese "Programmierarbeit" findet in einem Editor statt. Wird nun die Klasse "eingecheckt", so wird erfindungsgemäß lediglich die Klasse selbst persistiert sowie versioniert, keine Datei.

Bei der Erstellung und/oder nachträglichen Veränderung einer Klasse dient der Editor lediglich als Programmierwerkzeug zur Erstellung/Änderung/Erweiterung der Klasse, es entsteht am Ende jedoch keine Datei dabei. Dadurch, dass sich das Editieren auf die Klasse selbst auswirkt und die Klasse auch mittels des erfindungsgemäßen Versionierungssystem gespeichert/versioniert wird, ist die Erstellung von Dateien für Klassen ein jederzeit vornehmbarer, nicht-destruktiver Weg, um eine solche Datei bei Bedarf durch Generierung zu erhalten.

Formatierungsangaben wie etwa CR/LF oder TABS sind erfindungsgemäß in der mittels der Datenbank verwalteten Funktion oder Klasse nicht vorhanden und müssen daher nicht z. B. mit Tools wie "StyleCop" überprüft werden. Anstelle der Überprüfung von Formatierungsangaben hinsichtlich ihrer Konformität zu einem Regelwerk, werden diese gar nicht gespeichert und damit versioniert, sondern nur für die Anzeige und Bearbeitung nicht-destruktiv so erzeugt/dargestellt, wie gewünscht. Da Formatierungsangaben entfallen, sind hier Unterschiede bei Merge- sowie Vergleichsoperationen nicht relevant, denn bei der Anwendung dieser Operationen gibt es keine diesbezüglichen Informationen und damit Unterschiede mehr. Da keine Dateien versioniert werden, sind Vorgaben wie z. B. "Eine Klasse pro Quellcode-Datei ("Sourcefile") hinfällig, da sowieso nur Klassen versioniert werden, und keine "Sourcefiles".

Sollte die Notwendigkeit bestehen, Klassen in Dateien zu verpacken, können diese jederzeit automatisch mit den gewünschten Formatierungsregeln, Namensregeln und Kardinalitätsregeln erzeugt werden. Soll eine Klasse außerhalb des Versionierungssystems verändert/erweitert/ergänzt werden, besteht dadurch also die Möglichkeit, eine Klasse "auszuchecken" und in eine Datei zu packen. Eine Klasse, die ausgecheckt und in eine Datei "verpackt" wurde, kann mit beliebigen Editoren sowie IDEs editiert werden. Wird eine Klasse, die in eine Datei verpackt ist/war und außerhalb des System bearbeitet wurde, wieder eingecheckt, wird nur die veränderte Klasse eingecheckt und versioniert; die Datei kann danach gelöscht bzw. verworfen werden, da sie nicht Teil der Versionierung ist.

Natürlich können die etwaigen zwischenzeitlich hinzugefügten Kommentare auch in dem erfindungsgemäßen System gespeichert werden und beim späteren "aus-checken" der Informationen wieder in die dabei neu erzeugte Datei eingefügt werden. Projektdateien, wie etwa "csproj"-Dateien, die wiederum Sourcefiles auflisten, sind nicht mehr nötig. Welche Klassen in welche DLLs compiliert werden, ist flexibel handhabbar und nicht statisch festgelegt. Abhängigkeiten von Klassen, welche somit auch die Re-Compilierung anderer Klassen erzwingen, werden nicht statisch festgelegt bzw. definiert, sondern ergeben sich von selbst über sog. "caller"/"callee" Beziehungen, die vom erfindungsgemäßen System automatisch identifiziert werden können. Methoden der "caller" und "callees" können also automatisch abgeglichen bzw. erkannt werden, wodurch Änderungen von Methodensignaturen automatisch oder teilmanuell nachgeführt werden (Obsolete und/oder Nachführung). Letzteres bedeutet, dass immer eine compilierte Version der Anwendung vorliegen kann und somit diese auch jederzeit startbereit d. h. aufrufbar ist.

Wegen des Bezuges der Versionierung auf kleinste funktionale Elemente kann man auch von einer "Sub-Versionierung" z.B. einer Klasse sprechen. Dabei hat nicht nur die Klasse eine Version, sondern z.B. auch die Methoden. Insbesondere Änderungen z.B. an öffentlichen Methoden wie etwa Änderungen der Methodensignatur (Änderungen der Parameter) wirken sich auf alle "Caller", d.h. alle Benutzer der Methode, aus.

Selbst das Editieren/Ändern einer Klasse z.B. zu Debugging-Zwecken kann in einer laufenden Anwendung auswirkbar gemacht werden und bei Bedarf persistiert werden. Anstatt QuellcodeDateien ("Sourcefiles") auf Formatierungsregeln hin zu überprüfen, werden die gewünschten Formatierungsregeln dann angewandt, wenn eine Klasse im Editor (IDE) editiert wird bzw. wenn dazu eine Datei erzeugt wird. Es besteht sogar die Möglichkeit, alle Klassen eines bestimmten Namensraums in eine einzelne Datei zu verpacken, oder eben wie üblich eine Datei pro Klasse zu erzeugen, wobei die Datei automatisch den Namen der Klasse erhält. In den allermeisten Fällen wird man aber gar keine Dateien benötigen. Wesentlich ist die Verwaltung der Klassen selbst und die Versionierung sowie "Persistierung" (Festschreibung) derselben. Es ist vorteilhaft auch möglich, für das "aus-checken" Klassen als "partiell" zu markieren und somit in zwei Sourcefiles aufzuteilen, wobei aber zur Speicherung einer solchen Struktur in der Datenbank erfindungsgemäß keine zwei Dateien oder dgl. erzeugt werden, sondern eine Klasse wird z.B. in zwei Segmente aufgeteilt, welche jeweils bestimmte Methoden beinhalten.

Ein Zertifikat, welches sich auf einen Programmteil oder auf das komplette Programm beziehen kann, muss erst dann widerrufen oder als ungültig erklärt werden, wenn eines der damit zertifizierten Elemente funktional geändert wurde, sonst nicht. Dies bedeutet, dass beispielsweise Änderungen von Kommentaren, Formatierungselementen oder dergleichen eine Gültigkeit eines solchen Zertifikates nicht berühren.

Weiterhin kann sichergestellt werden, dass eine aufwändige Neu-Kompilierung von Programmteilen oder eines kompletten Programms nur dann erfolgt, wenn funktionale Änderungen an entsprechenden Elementen vorgenommen worden sind. Auch hier sind formale Änderungen unerheblich.

Wesentlich ist, dass nicht einer Datei eine Version zugeordnet wird, sondern einer "Klasse", der Methode einer Klasse, selbst Felder können eine eigene Version bekommen. Ändert man etwa die Namen von privaten Methoden oder privaten Feldern, so ist die Außenbeziehung davon vollkommen unberührt. Auch ein Kommentar kann verschiedene Versionsnummern erhalten bzw. alle Kommentare als Ganzes ebenso eine. Zur Entscheidung über beispielsweise ein "Delta-Compile" wäre dies aber unerheblich, nur funktional relevante Änderungen würden für die Entscheidung in Betracht gezogen. Andererseits sind beispielsweise für ein Programm zur Erzeugung einer Hilfe-Datei gerade eben nur die Dokumentationen / Kommentare der Klassen, Felder, Properties und Methoden und deren eigene Versionsbezeichnungen interessant.

## Patentansprüche

1. Verfahren zur Speicherung und zur Versionsverwaltung von Computerprogrammen,
wobei mit jeder Änderung von Programmcode des Computerprogramms eine neue Versionsbezeichnung zugeordnet wird, und wobei der Programmcode eine Vielzahl Programmelemente umfasst,
dass die Programmelemente einzeln zugreifbar in einer Datenbank gespeichert werden,
dass jedem Programmelement eine separate Versionsbezeichnung zugeordnet wird,
**dadurch gekennzeichnet,**
**dass** bei einer funktionalen Änderung des Programmelementes die Versionsbezeichnung aktualisiert wird, und
**dass** der zu speichernde Programmcode Formatierungsangaben umfasst, wobei diese Formatierungsangaben beim Speichern der in dem Programmcode enthaltenen Programmelemente verworfen und beim Zugriff auf das oder die Programmelemente mittels eines Editors anhand eines Regelwerks neu erzeugt und dargestellt oder ausgegeben werden.

2. Verfahren nach Patentanspruch 1,
**dadurch gekennzeichnet,**
**dass** als Programmelemente jeweils einzelne funktionale Einheiten, insbesondere einzelne Klassen oder Funktionen, verwaltet werden.

3. Verfahren nach einem der vorhergehenden Patentansprüche,
**dadurch gekennzeichnet,**
**dass** der Programmcode Programmelemente und nicht-funktionale Elemente, insbesondere Kommentare und Formatierungsangaben, umfasst, wobei die nicht-funktionalen Elemente getrennt von den zugehörigen Programmelementen in der Datenbank gespeichert werden.

4. Verfahren nach Patentanspruch 3,
**dadurch gekennzeichnet,**
**dass** in der Datenbank jeweils eine Zuordnung zwischen den Programmelementen und den zugehörigen nicht-funktionalen Elementen gespeichert wird.

5. Verfahren nach einem der vorhergehenden Patentansprüche,
**dadurch gekennzeichnet,**
**dass** die Datenbank Informationen über Abhängigkeiten zwischen den Programmeelementen, insbesondere über wechselweise Verweise oder Zugriffe auf Schnittstellen der Programmelemente, enthält, wobei beim Erzeugen einer neuen Version eines Programmelementes überprüft und ggf. ausgegeben oder signalisiert wird, ob andere Programmelemente, für die mit dem geänderten Programmelement Abhängigkeiten bestehen, angepasst werden müssen.

6. System zur Speicherung und zur Versionsverwaltung von Computerprogrammen,
wobei das System derart ausgestaltet ist, dass mit jeder Änderung von Programmcode des Computerprogramms eine neue Versionsbezeichnung zugeordnet wird, und
wobei der Programmcode aus einer Vielzahl Programmelemente besteht oder eine Vielzahl Programmelemente umfasst,
dass das System zur einzeln zugreifbaren Speicherung der Programmelemente in einer Datenbank eingerichtet ist,
dass das System zur Zuordnung einer separaten Versionsbezeichnung zu jedem einzelnen Programmelement eingerichtet ist,
**dadurch gekennzeichnet,**
**dass** das System derart ausgestaltet ist, dass bei einer funktionalen Änderung des Programmelementes die Versionsbezeichnung jeweils aktualisiert wird, und
**dass** der Programmcode Formatierungsangaben umfasst, wobei das System derart eingerichtet ist, dass die Formatierungsangaben bei Speichern der in dem Programmcode enthaltenen Programmelemente jeweils entfernt und bei Zugriff auf die Programmelemente mittels eines Editors anhand eines Regelwerkes jeweils neu erzeugt werden.

7. System nach Patentanspruch 6,
**dadurch gekennzeichnet,**
**dass** das Programmelement eine einzelne funktionale Einheit, insbesondere eine einzelne Klasse, Funktion oder Methode ist.

8. System nach einem der Patentansprüche 6 oder 7,
**dadurch gekennzeichnet,**
**dass** der Programmcode Programmelemente und nicht-funktionale Elemente, insbesondere Kommentare und Formatierungsangaben, umfasst, wobei das System zur getrennten Verwaltung und/oder Speicherung der Programmelemente und der zugehörigen nicht-funktionalen Elemente in der Datenbank eingerichtet ist.

9. System nach Patentanspruch 8,
**dadurch gekennzeichnet,**
**dass** das System zur Speicherung einer jeweiligen Zuordnung von Programmelementen und zugehörigen nicht-funktionalen Elementen in der Datenbank eingerichtet ist.

10. System nach einem der Patentansprüche 6 bis 9,
**dadurch gekennzeichnet,**
**dass** die Datenbank zur Speicherung von Informationen über Abhängigkeiten zwischen den Programmelementen, insbesondere über den wechselweisen Verweis auf Schnittstellen der Programmelemente, eingerichtet ist, wobei das System derart ausgestaltet ist, dass mit Speichern einer neuen Version eines Programmelementes überprüft und ggf. angezeigt wird, ob andere Programmelemente mit diesem Programmelement eine Abhängigkeit aufweisen und diese daher angepasst werden müssen.

## Claims

1. Method for storing and managing the version of computer programs,
wherein a new version designation is assigned with each change in program code of the computer program, and
wherein the program code comprises a multiplicity of program elements,
wherein the program elements are stored in an individually accessible manner in a database,
wherein a separate version designation is assigned to each program element,
**characterized**
**in that** the version designation is updated in the event of a functional change in the program element, and
**in that** the program code to be stored comprises formatting details, wherein these formatting details are discarded when storing the program elements contained in the program code and are newly generated and displayed or output when accessing the program element(s) by means of an editor on the basis of a set of rules.

2. Method according to Patent Claim 1,
**characterized**
**in that** individual functional units, in particular individual classes or functions, are respectively managed as program elements.

3. Method according to one of the preceding patent claims,
**characterized**
**in that** the program code comprises program elements and non-functional elements, in particular comments and formatting details, wherein the non-functional elements are stored separately from the associated program elements in the database.

4. Method according to Patent Claim 3,
**characterized**
**in that** an assignment between the program elements and the associated non-functional elements is respectively stored in the database.

5. Method according to one of the preceding patent claims,
**characterized**
**in that** the database contains information relating to dependencies between the program elements, in particular relating to reciprocal references or access to interfaces of the program elements, wherein, when generating a new version of a program element, it is checked and possibly output or signalled whether other program elements, for which there are dependencies on the changed program element, must be adapted.

6. System for storing and managing the version of computer programs,
wherein the system is configured in such a manner that a new version designation is assigned with each change in program code of the computer program, and
wherein the program code consists of a multiplicity of program elements or comprises a multiplicity of program elements, wherein the system is set up to store the program elements in a database in an individually accessible manner,
wherein the system is set up to assign a separate version designation to each individual program element,
**characterized**
**in that** the system is configured in such a manner that the version designation is respectively updated in the event of a functional change in the program element, and
**in that** the program code comprises formatting details, wherein the system is set up in such a manner that the formatting details are respectively removed when storing the program elements contained in the program code and are respectively newly generated when accessing the program elements by means of an editor on the basis of a set of rules.

7. System according to Patent Claim 6,
**characterized**
**in that** the program element is an individual functional unit, in particular an individual class, function or method.

8. System according to either of Patent Claims 6 and 7,
**characterized**
**in that** the program code comprises program elements and non-functional elements, in particular comments and formatting details, wherein the system is set up to separately manage and/or store the program elements and the associated non-functional elements in the database.

9. System according to Patent Claim 8,
**characterized**
**in that** the system is set up to store a respective assignment of program elements and associated non-functional elements in the database.

10. System according to one of Patent Claims 6 to 9,
**characterized**
**in that** the database is set up to store information relating to dependencies between the program elements, in particular relating to the mutual reference to interfaces of the program elements, wherein the system is configured in such a manner that, with storage of a new version of a program element, it is checked and possibly displayed whether other program elements have a dependency on this program element and therefore they have to be adapted.

## Revendications

1. Procédé de mémorisation et de gestion de versions de programme d'ordinateur,
dans lequel on associe une nouvelle désignation de version à chaque modification du code du programme d'ordinateur et dans lequel le code du programme comprend une pluralité d'éléments de programme,
en ce que l'on mémorise les éléments du programme de manière accessible individuellement dans une base de données,
en ce qu'une désignation de version distincte est affectée à chaque élément de programme,
**caractérisé**
**en ce que** s'il se produit une modification fonctionnelle de l'élément de programme, on met à jour la désignation de la version et
**en ce que** le code de programme à mémoriser comprend des indications de formatation, ces indications de formatation étant rejetées lors de la mémorisation des éléments de programme contenus dans le code de programme et étant, lors de l'accès à l'élément de programme ou aux éléments de programme, produites à nouveau et représentées ou émises au moyen d'un éditeur à l'aide d'un système de réglage.

2. Procédé suivant la revendication 1,
**caractérisé**
**en ce que** on gère, comme éléments de programme, respectivement des unités fonctionnelles individuelles, notamment des classes ou des fonctions individuelles.

3. Procédé suivant l'une des revendications précédentes,
**caractérisé**
**en ce que** le code du programme comprend des éléments de programme et des éléments non fonctionnels, notamment des commentaires et des indications de formatage, les éléments non fonctionnels étant mémorisés dans la base de données, séparément des éléments de programme associés.

4. Procédé suivant la revendication 3,
**caractérisé**
**en ce que** l'on mémorise dans la base de données respectivement une affectation entre les éléments de programme et les éléments non fonctionnels associés.

5. Procédé suivant l'une des revendications précédentes,
**caractérisé**
**en ce que** la base de données contient des informations sur des dépendances entre les éléments du programme, notamment sur des renvois ou des accès réciproques à des interfaces des éléments du programme, dans lequel, à la production d'une version nouvelle d'un élément de programme, on contrôle et, le cas échéant, on émet ou on signale si d'autres éléments de programme, sur lesquels il y a des dépendances à l'élément de programme modifié, doivent être adaptés.

6. Système de mémorisation et de gestion de version de programme d'ordinateur,
dans lequel le système est constitué de manière à affecter, à chaque modification du code du programme d'ordinateur, une caractérisation de version nouvelle et
dans lequel le code du programme est constitué d'une pluralité d'éléments de programme, qui comprend une pluralité d'éléments de programme,
en ce que le système est conçu pour la mémorisation, d'une manière accessible individuellement, des éléments du programme dans une base de données,
en ce que le système est conçu pour affecter une désignation de version distincte à chaque élément de programme individuel, **caractérisé**
**en ce que** le système est conformé de manière à ce que, s'il se produit une modification fonctionnelle de l'élément de programme, la désignation de version est mise à jour et
**en ce que** le code de programme comprend des indications de formatage, le système étant conçu pour éliminer les indications de formatage lors de la mémorisation des éléments du programme contenus dans le code du programme et pour, s'il y a accès aux éléments du programme, les produire à nouveau au moyen d'un éditeur à l'aide d'un système de réglage.

7. Système suivant la revendication 6,
**caractérisé**
**en ce que** l'élément de programme est une unité fonctionnelle individuelle contenant une classe, une fonction ou une méthode individuelle.

8. Système suivant l'une des revendications 6 ou 7,
**caractérisé**
**en ce que** le code du programme comprend des éléments de programme et des élément non fonctionnels, notamment des commentaires et des indications de formatage, le système étant conçu pour gérer et/ou mémoriser de manière séparée les éléments du programme et les éléments non fonctionnels associés dans la base de données.

9. Système suivant la revendication 8,
**caractérisé**
**en ce que** le système est conçu pour mémoriser dans la base de données une affectation respective d'éléments de programme et d'éléments non fonctionnels associés.

10. Système suivant l'une des revendications 6 à 9,
**caractérisé**
**en ce que** la base de données est conçue pour mémoriser des informations sur les dépendances entre les éléments de programme, notamment sur leur envoi réciproque à des interfaces des éléments de programme, le système étant conformé de manière à contrôler et le cas échéant à afficher, par des mémoires, une nouvelle version d'un élément de programme, si d'autres éléments de programme ont une dépendance à cet élément de programme et doivent donc être adaptés à celui-ci.
